# EUROPÄISCHE PATENTANMELDUNG

(11) **EP 3 837 984 A1**
(43) Veröffentlichungstag der Anmeldung: **23.06.2021**
(21) Anmeldenummer: 20197684.2
(22) Anmeldetag: 23.09.2020
(51) Int. Cl.: A23C 9/142, A23C 9/156, A23C 21/08

(54) **VERFAHREN ZUR HERSTELLUNG EINES MILCHSERUMS**

(30) Priorität: 16.12.2019 DE 102019134503
(71) Anmelder: Pernsteiner Entwicklungs GmbH, 4542 Nussbach (AT)
(72) Erfinder: Mitterhumer, Friedrich, 4542 Nußbach (AT)
(74) Vertreter: Rupp, Christian

(57) **Zusammenfassung**

Die vorliegende Erfindung betrifft ein Milchserum, sowie ein Verfahren zu dessen Herstellung aufweisend die Verfahrensschritte a. Ultrafiltration von Milch, Reduzierung des Zuckergehalts des in Schritt a. erhaltenen Permeats, Aufkonzentrierung des in Schritt b. erhaltenen Permeats. Die Erfindung betrifft ferner ein Erfrischungsgetränk umfassend das erfindungsgemäße Milchserum, sowie die Verwendung des erfindungsgemäßen Milchserums zur Herstellung eines Erfrischungsgetränks.

## Beschreibung

### 1. Gebiet der Erfindung

Die vorliegende Erfindung betrifft ein Milchserum, sowie ein Verfahren zu dessen Herstellung. Die Erfindung betrifft ferner ein Erfrischungsgetränk umfassend das erfindungsgemäße Milchserum, sowie die Verwendung des erfindungsgemäßen Milchserums zur Herstellung eines Erfrischungsgetränks.

### 2. Hintergrund

Molke fällt während der Käse- oder Caseinherstellung in großen Mengen als wasserlösliches Abfallprodukt an. Eine Form der Weiternutzung der anfallenden Molke liegt in der Herstellung von Milchserum, welches frei von Proteinen ist, jedoch noch andere wertvolle wasserlösliche Inhaltsstoffe wie Milchzucker, Mineralstoffe, wasserlösliche Vitamine und organische Säuren enthält. Durch den im Milchserum enthaltenen Milchzucker weißt Milchserum üblicherweise einen süßlichen Geschmack auf, weshalb es als natürlicher Zuckerersatz in der Lebensmittel- und Futtermittelindustrie Einsatz findet. Ferner kann Milchserum als natürliche Basis für die Zubereitung von Getränken dienen.

Ein Nachteil an aus Molke gewonnenem Milchserum liegt jedoch darin, dass es durch die Verfahrensschritte während der Käseherstellung zu einem Verlust an wertvollen Mineralstoffen, wie Natrium, Kalium, Magnesium und Calcium kommen kann. Ferner weißt das aus der Molke hergestellte Milchserum ein wenig vollmundiges Mundgefühl auf, was oftmals die Zugabe von zusätzlichem Zucker bzw. strukturgebender Inhaltstoffe für den Einsatz in Erfrischungsgetränken notwendig macht. Außerdem ergibt sich eine verringerte Akzeptanz des Verbrauchers aufgrund der Tatsache, dass das Milchserum aus einem Abfallprodukt der Käseherstellung (Molke) hergestellt wird.

Dadurch ergibt sich eine Notwendigkeit für ein Verfahren zur Herstellung eines Milchserums, welches die oben genannten Nachteile nicht aufweist.

### 3. Beschreibung der Erfindung

Gemäß der vorliegenden Erfindung wird ein Verfahren zur Herstellung eines Milchserums bereitgestellt, welches die folgenden Verfahrensschritte aufweist:
a. Ultrafiltration von Milch;
b. Reduzierung des Zuckergehalts des in Schritt a) erhaltenen Permeats;
c. Aufkonzentrierung des in Schritt b) erhaltenen Permeats.

Unter Milchserum wird der wasserlösliche Teil der Milch verstanden. Im Gegensatz zur Molke enthält das Milchserum jedoch im Wesentlichen keine Milchproteine mehr.

Gemäß dem erfindungsgemäßen Verfahren wird Milch als Ausgangsstoff verwendet. Unter Milch ist jede Form der Milch tierischen oder pflanzlichen Ursprungs zu verstehen. Bespiele für Milch tierischen Ursprungs sind Kuhmilch, Ziegenmilch, Schafsmilch, Kamelmilch, Eselmilch, Stutenmilch oder Büffelmilch. Beispiele für Milch pflanzlichen Ursprungs sind Sojamilch, Reismilch, Mandelmilch, Hafermilch, Dinkelmilch oder Kokosmilch. Es kann auch eine Mischung verschiedener Milchsorten verwendet werden.

In einer bevorzugten Ausführungsform ist die Milch tierischen Ursprungs, bevorzugter Kuh-, Ziegen- oder Schafsmilch. Am bevorzugtesten ist die eingesetzte Milch Kuhmilch. Die bevorzugten Milchsorten weisen ein besonders günstiges Mineralstoffprofil auf, insbesondere gemessen am täglichen Bedarf eines durchschnittlichen Erwachsenen.

In einer bevorzugten Ausführungsform weist die eingesetzte Milch einen Fettgehalt zwischen 0,1 und 8 Gewichtsprozent (Gew.-%) auf. Bevorzugter liegt der Fettgehalt zwischen 0,2 und 5 Gew.-%, am bevorzugtesten zwischen 0,3 und 4,5 Gew.-%.

In einer bevorzugten Ausführungsform ist die eingesetzte Milch biologisch, d.h. dass die eingesetzte Milch wurde mit Mitteln der biologischen Landwirtschaft erzeugt, im Gegensatz zur konventionellen Landwirtschaft.

Anhaltspunkte was unter biologischer Landwirtschaft zu verstehen ist, ergeben sich aus der EU-Öko-Verordnung (EG) Nr. 834/2007.

In einer bevorzugten Ausführungsform ist die eingesetzte Milch laktosefrei. Laktosefreie Milch wird bevorzugt durch enzymatische Aufspaltung der Laktose in die Monomeren Galaktose und Glucose erhalten. Bevorzugter wird die laktosefreie Milch mittels nicht gentechnisch veränderten Enzymen erhalten, damit biologisch erzeugte Milch weiterhin als biologisch gelten kann.

Gemäß dem erfindungsgemäßen Verfahren wird die Milch in Schritt a) einer Ultrafiltration unterworfen. Unter Ultrafiltration versteht man ein Filtrationsverfahren aus dem Bereich der Membrantechnik, mit dem sich makromolekulare Substanzen und kleine Partikel aus einem Medium abtrennen und konzentrieren lassen. Bevorzugt liegt die Ausschlussgrenze bei der Ultrafiltration in einem Bereich zwischen 2 und 100 nm, d.h. Inhaltstoffe größer als die Ausschlussgrenze werden zurückbehalten (als Filtrat). Nach der Ultrafiltration erhält man ein wässriges Permeat, welches die Inhaltsstoffe enthält, die die Membran passieren konnten. Bevorzugt enthält das Permeat Mineralstoffe, Milchzucker (Laktose), wasserlösliche Vitamine und organische Säuren. Bei laktosefreier Milch enthält das Permeat die entsprechenden Spaltprodukte/-zucker der Laktose. Das nach Ultrafiltration erhaltene Permeat enthält im Wesentlichen keine Milchproteine mehr (Proteingehalt kleiner als 0,25 Gew.-%).

Gemäß dem erfindungsgemäßen Verfahren, wird in einem weiteren Schritt b) der Zuckergehalt des nach Schritt a) erhaltenen Permeats reduziert. Im Schritt b) wird folglich der Gehalt an Laktose bzw. der Gehalt an Spaltprodukten der Laktose (bei laktosefreier Milch) im Permeat reduziert.

In einer bevorzugten Ausführungsform bewirkt Schritt b) eine Reduzierung des Zuckergehalts von anfänglich 2,8-4,7 Gew.-% zu einem Zuckergehalt von höchstens 0,1 Gew.-%.

In einer bevorzugten Ausführungsform bewirkt Schritt b) ebenfalls eine Aufkonzentrierung des in Schritt a) erhaltenen Permeats um einen Faktor von 1 bis 5, bevorzugt um den Faktor 1 bis **3.**

In einer bevorzugten Ausführungsform wird Schritt b) mittels Nanofiltration durchgeführt. Ähnlich zur Ultrafiltration versteht man unter Nanofiltration ein Filtrationsverfahren aus dem Bereich der Membrantechnik. Bevorzugt liegt die Ausschlussgrenze bei der Nanofiltration in einem Bereich zwischen 1 und 2 nm, d.h. Inhaltstoffe größer als die Ausschlussgrenze werden zurückbehalten (als Filtrat). Nach der Nanofiltration erhält man ein wässriges Permeat, welches die Inhaltsstoffe enthält, die die Membran passieren konnten.

Gemäß dem erfindungsgemäßen Verfahren, wird in einem weiteren Schritt c) das in Schritt b) erhaltene Permeat aufkonzentriert.

In einer bevorzugten Ausführungsform wird Schritt c) mittels Umkehrosmose durchgeführt. Unter Umkehrosmose oder Reversosmose versteht man ein physikalisches Verfahren zur Konzentrierung von in Flüssigkeiten gelösten Stoffen, bei der mit Druck der natürliche Osmose-Prozess umgekehrt wird.

In einer bevorzugten Ausführungsform bewirkt Schritt c) eine Aufkonzentrierung des in Schritt b) erhaltenen Permeats um einen Faktor von 2 bis 8, bevorzugt um einen Faktor von 3 bis 4.

In einer bevorzugten Ausführungsform wird das nach Schritt c) erhaltene Permeat nicht als Fermentationsmedium verwendet, insbesondere nicht als Fermentationsmedium für Mikroorganismen wie z.B. Bakterien oder Hefen.

In einer bevorzugten Ausführungsform erfolgt in einem weiteren Schritt eine Aromatisierung des in Schritt c) erhaltenen Permeats. Durch die Aromatisierung wird dem Permeat ein gewisser Geschmack bzw. Geruch verliehen. Die Aromatisierung kann durch Zugabe aller dem Fachmann bekannten Aroma- bzw. Geschmacksstoffen erfolgen. Bevorzugt wird die Aromatisierung mit Teekräutern und/oder Teekräuterextrakten und/oder Früchten und/oder Fruchtextrakten durchgeführt, bevorzugter mit biologisch gewonnenen Teekräutern und/oder Teekräuterextrakten und/oder Früchten und/oder Fruchtextrakten.

Beispiele für geeignete Teekräuter sind Minze, Thymian, Lavendel, Hagebutten, Brennnessel, Salbei, Birke, Löwenzahn, Holunderblüten, Kamille, Ringelblume, Pfefferminze, Ingwer oder Melisse. Es kann auch eine Mischung verschiedener Teekräuter verwendet werden. Bevorzugt wird Pfefferminze verwendet.

Beispiele für geeignete Früchte sind Apfel, Brombeere, Erdbeere, Fenchel, Heidelbeere, Himbeere, Roter Holunder, Holunderbeere, Kirsche, Quitte, Sanddorn oder Wacholder. Es kann auch eine Mischung verschiedener Früchte verwendet werden. Bevorzugt wird Holunderbeere verwendet.

In einer bevorzugten Ausführungsform erfolgt in einem weiteren Schritt eine Süßung des in Schritt c) erhaltenen Permeats durch Zugabe eines oder mehrerer Süßstoffe. Süßstoffe sind synthetisch hergestellte oder natürliche Ersatzstoffe für Zucker, welche die Süßkraft von Zucker übertreffen können. Im Gegensatz zu Zucker, haben Süßstoffe keinen oder nur einen sehr geringen physiologischen Brennwert. Bespiele für Süßstoffe sind Acesulfam, Aspartam, Cyclamat, Neohesperidin, Saccharin, Sucralose, sowie die Zuckeralkohole Sorbit, Xylit und Mannit.

Bevorzugt erfolgt die Süßung durch Zugabe eines Süßstoffs welcher Steviablätter (*Stevia rebaudiana*) enthält, bevorzugter durch Zugabe eines Süßstoffs welcher biologisch gewonnene Steviablätter enthält. Der Vorteil der Verwendung von Steviablättern besteht darin, dass die Zugabe von Steviablättern zu einer Süßverstärkung des Permeats führt, welche über die normale Süßungskraft der Steviablätter hinausgeht. Dies deutet auf einen synergistischen Süßeffekt zwischen den Inhaltsstoffen des Permeats und der Steviablätter hin.

Im Falle einer zusätzlichen Aromatisierung des Permeats kann die Süßung vor/nach oder gleichzeitig mit der Aromatisierung erfolgen. Bevorzugt erfolgt die Süßung und Aromatisierung des in Schritt c) erhaltenen Permeats gleichzeitig. Bevorzugt werden hierbei die Aroma-/Geschmackstoffe sowie die Süßstoffe mit dem Permeat vermischt und in einem Edelstahlbehälter für mehrere Minuten erhitzt, bevorzugt für 5 bis 10 Minuten bei einer Temperatur zwischen 90 °C und 100 °C. Bevorzugt wird das so gewonnene Permeat im Anschluss filtriert und pasteurisiert.

Die vorliegende Erfindung betrifft außerdem ein Milchserum hergestellt nach dem erfindungsgemäßen Verfahren.

In einer bevorzugten Ausführungsform ist das Milchserum im Wesentlichen frei von Proteinen. Bevorzugt weist das Milchserum einen Proteingehalt von höchstens 0,5 Gew.-% auf.

In einer bevorzugten Ausführungsform ist das Milchserum aromatisiert.

In einer bevorzugten Ausführungsform ist das Milchserum biologisch. Unter biologisch ist zu verstehen, dass sowohl die zur Herstellung des Milchserums eingesetzten Materialien als auch die ggf. während des Herstellungsverfahrens eingesetzten Hilfsstoffe den Anforderungen an biologische Materialien genügen.

In einer bevorzugten Ausführungsform weist das Milchserum einen reduzierten Zuckergehalt auf. Die Reduzierung des Zuckergehalts bezieht sich relativ zum Zuckergehalt wie er aus den für die Herstellung des Milchserums eingesetzten Ausgangsmaterialien zu erwarten wäre. Der Zuckergehalt bezieht sich auf den Gesamtzuckergehalt aller im Milchserum vorkommenden Zucker, d.h. insbesondere auf die im Milchserum vorhandenen Mono- und Disaccharide. Beispiele für Monosaccharide sind Glucose, Fructose und Galaktose. Beispiele für Disaccharide sind Laktose, Saccharose und Maltose. Die Vorteile einer reduzierten Zuckeraufnahme sind allgemein anerkannt, darunter fallen insbesondere ein geringeres Risiko für Fettleibigkeit, Diabetes, Bluthochdruck, Gicht, Osteoporose und Karies.

Bevorzugt weist das Milchserum einen Zuckergehalt von höchstens 1 g/100 mL auf, bevorzugter von 0,2 bis 0,8 g/100 mL, am bevorzugtesten von 0,4 bis 0,6 g/100 mL. Trotz des niedrigen Zuckergehalts weist das Milchserum ein vollmundiges Mundgefühl auf, weshalb keine weiteren Zusatzstoffe wie z.B. Dickungsmittel zugegeben werden müssen.

In einer bevorzugten Ausführungsform enthält das Milchserum einen oder mehrere Süßstoffe, bevorzugter einen Süßstoff, der Steviablätter enthält, am bevorzugtesten einen Süßstoff, der biologisch gewonnene Steviablätter enthält. Am bevorzugtesten besteht der Süßstoff aus biologisch gewonnenen Steviablättern.

In einer bevorzugten Ausführungsform ist das Milchserum laktosefrei. Laktosefrei bedeutet, dass das Milchserum nur noch Spaltprodukte der Laktose, jedoch keine intakte Laktose mehr enthält.

In einer bevorzugten Ausführungsform weist das Milchserum einen Natriumgehalt zwischen 1000 und 4000 mg/L auf, bevorzugter zwischen 2000 und 3000 mg/L, am bevorzugtesten zwischen 2400 und 2600 mg/L.

In einer bevorzugten Ausführungsform weist das Milchserum einen Kaliumgehalt zwischen 10000 und 15000 mg/L auf, bevorzugter zwischen 12000 und 14000 mg/L, am bevorzugtesten zwischen 13000 und 13500 mg/L.

In einer bevorzugten Ausführungsform weist das Milchserum einen Magnesiumgehalt zwischen 500 und 1000 mg/L auf, bevorzugter zwischen 600 und 900 mg/L, am bevorzugtesten zwischen 700 und 800 mg/L.

In einer bevorzugten Ausführungsform weist das Milchserum einen Calciumgehalt zwischen 8000 und 12000 mg/L auf, bevorzugter zwischen 9000 und 11000 mg/L, am bevorzugtesten zwischen 9800 und 10200 mg/L.

Das erfindungsgemäße Milchserum weist einen hohen Gehalt an Natrium, Kalium, Magnesium und Calcium auf. Die ausreichende Versorgung mit diesen Mineralstoffen ist essentiell für einen reibungslosen Ablauf im menschlichen Stoffwechsel. Durch die Herstellung des Milchserums aus Milch anstatt aus der während der Käseherstellung anfallenden Molke können hohe Gehalte dieser Mineralstoffe erreicht werden und somit dazu beitragen den täglichen Bedarf an diesen Mineralstoffen zu decken.

Die vorliegende Erfindung betrifft außerdem ein Erfrischungsgetränk umfassend das erfindungsgemäße Milchserum.

Unter Erfrischungsgetränken werden Getränke auf Wasserbasis verstanden. Für gewöhnlich handelt es sich dabei um Kaltgetränke, d.h. Getränke, die kalt serviert werden. Regelmäßig enthalten Erfrischungsgetränke Kohlensäure, Mineralstoffe, Vitamine, Zucker, Fruchtkonzentrat, Aromen, Süßstoffe und weitere Zutaten.

In einer bevorzugten Ausführungsform weist das Erfrischungsgetränk einen Anteil an erfindungsgemäßem Milchserum von 2 bis 90 Gew.-% auf, bevorzugter von 5 bis 50 Gew.-%, am bevorzugtesten von 10 bis 20 Gew.-%.

In einer bevorzugten Ausführungsform weist das Erfrischungsgetränk einen Natriumgehalt zwischen 100 und 500 mg/L auf, bevorzugter zwischen 200 und 400 mg/L, am bevorzugtesten zwischen 300 und 350 mg/L.

In einer bevorzugten Ausführungsform weist das Erfrischungsgetränk einen Kaliumgehalt zwischen 1000 und 2000 mg/L auf, bevorzugter zwischen 1200 und 1800 mg/L, am bevorzugtesten zwischen 1500 und 1700 mg/L.

In einer bevorzugten Ausführungsform weist das Erfrischungsgetränk einen Magnesiumgehalt zwischen 10 und 200 mg/L auf, bevorzugter zwischen 20 und 150 mg/L, am bevorzugtesten zwischen 80 und 100 mg/L.

In einer bevorzugten Ausführungsform weist das Erfrischungsgetränk einen Calciumgehalt zwischen 500 und 2000 mg/L auf, bevorzugter zwischen 700 1400 mg/L, am bevorzugtesten zwischen 1100 und 1300 mg/L.

In einer bevorzugten Ausführungsform weist das Erfrischungsgetränk einen Zuckergehalt von höchstens 1 g/100 mL auf, bevorzugter von 0,1 bis 0,9 g/100 mL, am bevorzugtesten von 0,15 bis 0,3 g/100 mL.

In einer bevorzugten Ausführungsform ist das Erfrischungsgetränk im Wesentlichen frei von Proteinen. Bevorzugt weist das Erfrischungsgetränk einen Proteingehalt von höchstens 0.5 Gew.-% auf.

In einer bevorzugten Ausführungsform weist das Erfrischungsgetränk einen Energiegehalt zwischen 1 und 10 kcal/100 g auf, bevorzugter zwischen 2 und 8 kcal/100 g, bevorzugter zwischen 3 und 5 kcal/100 g.

In einer bevorzugten Ausführungsform weist das Erfrischungsgetränk Kohlensäure auf.

Die vorliegende Erfindung betrifft außerdem die Verwendung des erfindungsgemäßen Milchserums zur Herstellung eines Erfrischungsgetränks.

In einer bevorzugten Ausführungsform wird das erfindungsgemäße Milchserum zur Herstellung des Erfrischungsgetränks mit Wasser verdünnt. Bevorzug wird das erfindungsgemäße Milchserum um einen Faktor von 2 bis 10 verdünnt, bevorzugter um einen Faktor von 4 bis 8, am bevorzugtesten um einen Faktor von 7.

In einer bevorzugten Ausführungsform wird zur Herstellung des Erfrischungsgetränks Kohlenstoffdioxid (CO2) in das erfindungsgemäße Milchserum eingeleitet.

### Beispiele

### Herstellung des erfindungsgemäßen Milchserums:

Ausgehend von Kuhmilch (Fettgehalt: 4,2 %) wurde durch Ultrafiltration (Mehrstufige Anlage von LTH Dresden) ein Permeat gewonnen, welches die in Tabelle 1 (linke Spalte) aufgezeigten Inhaltsstoffe aufwies.

Anschließend wurde das so erhaltene Permeat einer Nanofiltration unterworfen (Mehrstufige Anlage von LTH Dresden), wobei einfach geladene Ionen die Membran passieren konnten. Das so erhaltene Permeat wurde anschließend weiter mittels Umkehrosmose aufkonzentriert. Die Inhaltsstoffe des fertigen Milchserums nach Nanofiltration (NF) und Umkehrosmose (UO) sind in Tabelle 1 aufgeführt (rechte Spalte).

Durch die oben genannten Verfahrensschritte konnte ausgehend von Kuhmilch ein Milchserum erhalten werden, welches einen niedrigen Protein- u. Zuckergehalt, aber einen hohen Gehalt an Mineralstoffen (Calcium, Kalium, Magnesium und Natrium) aufwies.

**Tabelle 1: Inhaltsstoffe des Permeats nach Ultrafiltration (UF) und Inhaltsstoffe des erfindungsgemäßen Milchserums nach Nanofiltration (NF) und Umkehrosmose (UO).**

| | Permeat (nach UF) | Milchserum (nach NF u. UO) |
|---|---|---|
| Eiweiß (g/100g) | 0,16 | <0,5 |
| Galactose (g/100g) | 0,75 | 0,1 |
| Calcium (mg/L) | 1.250 | 10.000 |
| Kalium (mg/L) | 1.650 | 13.200 |
| Magnesium (mg/L) | 95 | 760 |
| Natrium (mg/L) | 320 | 2.500 |
| Fructose (HPLC) g/100mL | <BG* | <BG* |
| Glucose (HPLC) g/100mL | <BG* | <BG* |
| Saccharose (HPLC) g/100mL | <BG* | <BG* |
| Maltose (HPLC) g/100mL | <BG* | <BG* |
| Lactose (HPLC) g/100mL | 2,8 | < 1,0 |
| Zucker gesamt g/100mL | 2,8 | <1,0 |

| | | |
|---|---|---|
| *BG: Bestimmungsgrenze (0,1 g/100 mL) | | |

Im Weiteren wurde das Milchserum aromatisiert bzw. gesüßt, indem das Milchserum zusammen mit Teekräutern und Früchten (Granatapfel, Orange, Hagebutte) sowie Steviablättern, jeweils aus kontrolliert biologischem Anbau, vereinigt und bei 95 °C für 7 min erhitzt wurde. Nach dem Erhitzen wurden die Teekräuter, Früchte und Steviablätter durch Filtration wieder vom aromatisierten, gesüßten Milchserum abgetrennt.

### Herstellung des erfindungsgemäßen Erfrischungsgetränks:

Zur Herstellung des erfindungsgemäßen Erfrischungsgetränks wurde das oben beschriebene Milchserum im Verhältnis 1:7 mit Wasser verdünnt. Ferner wurde zur Erzielung eines kohlensäurehaltigen Erfrischungsgetränks Kohlenstoffdioxid (CO₂) in das Erfrischungsgetränk eingeleitet (5 bis 7 g/L Liter) Im Anschluss wurde das so gewonnene Getränk abgefüllt und bei 72 °C pasteurisiert. Das gebrauchsfertige Erfrischungsgetränk wies die in Tabelle 2 aufgezeigten Inhaltstoffe auf.

**Tabelle 2: Inhaltsstoffe des erfindungsgemäßen Erfrischungsgetränks**

| | Erfindungsgemäße Erfrischungsgetränk |
|---|---|
| Eiweiß (g/100g) | n.d.* |
| Calcium (mg/L) | 1250 |
| Kalium (mg/L) | 1650 |
| Magnesium (mg/L) | 95 |
| Natrium (mg/L) | 313 |
| Zucker gesamt g/100 mL | 0.19 |

| | |
|---|---|
| * nicht detektierbar | |

Gegenüber bekannten Erfrischungsgetränken auf Milchserum-Basis (siehe Tabelle 3, "Vergleichserfrischungsgetränke") weist das erfindungsgemäße Erfrischungsgetränk einen geringeren Gesamtzuckergehalt sowie höhere Werte an wünschenswerten Mineralstoffen (Calcium, Kalium, Magnesium und Natrium) auf.

**Tabelle 3: Inhaltsstoffe der Vergleichserfrischungsgetränke**

| | Vergleichsgetränk 1 | Vergleichsgetränk 2 | Vergleichsgetränk 3 |
|---|---|---|---|
| Eiweiß (g/100g) | <0,5 | <0,5 | <0,5 |
| Galactose (g/100g) | <BG* | <BG* | <BG* |
| Calcium (mg/L) | 134 | 176 | 110 |
| Kalium (mg/L) | 472 | 552 | 301 |
| Magnesium (mg/L) | 31 | 31 | 23 |
| Natrium (mg/L) | 110 | 120 | 73 |
| Fructose (HPLC) g/100mL | 1 | 0,1 | 2,5 |
| Glucose (HPLC) g/100mL | 1,1 | <BG* | 0,5 |
| Saccharose (HPLC) g/100mL | 5,4 | <BG* | 1,1 |
| Maltose (HPLC) g/100mL | <BG* | <BG* | <BG* |
| Lactose (HPLC) g/100mL | 1,5 | 1,4 | 1 |
| Zucker gesamt g/100mL | 9 | 1,5 | 5,1 |

| | | | |
|---|---|---|---|
| *BG: Bestimmungsgrenze (0,1 g/100 mg) | | | |

## Patentansprüche

1. Verfahren zur Herstellung eines Milchserums, aufweisend die folgenden Verfahrensschritte:
a. Ultrafiltration von Milch;
b. Reduzierung des Zuckergehalts des in Schritt a) erhaltenen Permeats;
c. Aufkonzentrierung des in Schritt b) erhaltenen Permeats,
wobei in einem weiteren Schritt eine Aromatisierung des in Schritt c) erhaltenen Permeats mittels biologisch gewonnenen Teekräutern und/oder Teekräuterextrakten und/oder Früchten und/oder Fruchtextrakten erfolgt.

2. Verfahren nach Anspruch 1, wobei die Milch in Schritt a) Kuh-, Ziegen- oder Schafsmilch ist.

3. Verfahren nach Anspruch 1 oder 2, wobei Schritt b) mittels Nanofiltration durchgeführt wird.

4. Verfahren nach einem der vorangegangenen Ansprüchen, wobei Schritt c) mittels Umkehrosmose durchgeführt wird.

5. Ein Milchserum hergestellt gemäß dem Verfahren nach einem der Ansprüche 1 bis 4.

6. Das Milchserum gemäß Anspruch 5, wobei das Milchserum einen Proteingehalt von höchstens 0.5 Gew.-% aufweist.

7. Das Milchserum gemäß Anspruch 5 oder 6, wobei das Milchserum aromatisiert ist.

8. Das Milchserum gemäß einem der Ansprüche 5 bis 7, wobei das Milchserum einen reduzierten Zuckergehalt relativ zum Zuckergehalt wie er aus den für die Herstellung des Milchserums eingesetzten Ausgangsmaterialien zu erwarten wäre aufweist.

9. Das Milchserum gemäß Anspruch 8, wobei das Milchserum einen Zuckergehalt von höchstens 1 g/100 mL aufweist, bevorzugt von 0.2 bis 0.8 g/100 mL, bevorzugter von 0.4 bis 0.6 g/100 mL.

10. Das Milchserum gemäß einem der Ansprüche 5 bis 9, wobei das Milchserum einen Süßstoff enthält, der biologisch gewonnene Steviablätter enthält.

11. Ein Erfrischungsgetränk umfassend das Milchserum gemäß einem der Ansprüche 5 bis 10.

12. Verwendung eines Milchserums gemäß einem der Ansprüche 5 bis 10 zur Herstellung eines Erfrischungsgetränks.
